# FASCICULE DE BREVET EUROPEEN

(11) **EP 4 499 505 B1**
(45) Date de publication et mention de la délivrance du brevet: **04.03.2026**
(21) Numéro de dépôt: 23719433.7
(22) Date de dépôt: 27.03.2023
(51) Int. Cl.: B64D 27/40, B64D 27/18

(54) **ENSEMBLE DE SUSPENSION POUR UNE TURBOMACHINE**
AUFHÄNGUNGSANORDNUNG FÜR EINE TURBOMASCHINE
SUSPENSION ASSEMBLY FOR A TURBOMACHINE

(30) Priorité: 28.03.2022 FR 2202724
(43) Date de publication de la demande: 05.02.2025
(73) Titulaire: SAFRAN AIRCRAFT ENGINES, 75015 Paris (FR)
(72) Inventeur: CAPASSO, Valerio, 77550 MOISSY-CRAMAYEL (FR); GLEMAREC, Guillaume, 77550 MOISSY-CRAMAYEL (FR); VIGNES, Jean-Baptiste, Manuel, Nicolas, 77550 MOISSY-CRAMAYEL (FR)
(74) Mandataire: Ernest Gutmann - Yves Plasseraud S.A.S.
(86) Numéro de dépôt international: PCT/FR2023/050429
(87) Numéro de publication internationale: WO 2023/187284

(56) Documents cités:
- WO-A1-2008/074063
- WO-A1-2020/074811
- FR-A1- 3 021 298

## Description

La présente divulgation concerne un ensemble de suspension pour une turbomachine, en particulier pour un turboréacteur à double flux.

### Technique antérieure

Un turboréacteur à double flux comporte classiquement une veine annulaire d'écoulement d'un flux d'air primaire ou veine annulaire primaire comprenant, d'amont en aval dans le sens de circulation du flux de gaz au sein de la turbomachine, un compresseur basse pression, un compresseur haute pression, une chambre de combustion, une turbine haute pression et une turbine basse pression. Le turboréacteur comporte également une veine annulaire d'écoulement d'un flux d'air secondaire ou veine entourant extérieurement la veine annulaire primaire. La veine annulaire primaire et secondaire sont coaxiales, la veine annulaire secondaire étant agencée radialement à l'extérieur de la veine d'air primaire. Les termes radial et axial sont définis par rapport à l'axe de la turbomachine. Les termes amont et aval sont définis par rapport au sens de circulation des flux de gaz au sein de la turbomachine.

Le turboréacteur est généralement fixé à un pylône ou mât d'un aéronef, ledit pylône étant lui-même fixé à la structure de l'aéronef, par exemple à la voilure. Le pylône permet de transmettre les efforts générés par le turboréacteur à la structure de l'aéronef et permet également le cheminement de carburant, d'air et systèmes électriques et hydrauliques entre le turboréacteur et l'aéronef.

La demande de brevet FR 2 867 155 au nom de la Demanderesse divulgue une turbomachine fixée à un pylône par l'intermédiaire d'un ensemble de suspension comportant un ensemble de suspension amont et un ensemble de suspension aval. L'ensemble de suspension amont est fixé à un carter intermédiaire solidaire d'un carter de soufflante, l'ensemble de suspension aval étant fixé à un carter d'échappement. Les deux carters sont des éléments structuraux de la turbomachine.

Les dispositifs de suspension ont pour fonction d'assurer la transmission des efforts mécaniques entre la turbomachine et le pylône. Ces efforts sont notamment la poussée générée par la turbomachine, orientée selon l'axe de la turbomachine, les charges aérodynamiques latérales et le poids de la turbomachine.

Dans la suite de la description, on s'intéressera en particulier à l'ensemble de suspension amont.

Un tel ensemble de suspension amont connu comporte classiquement une poutre destinée à être fixée à un pylône d'un aéronef, une partie cylindrique articulée sur un boîtier de rotule, le boîtier de rotule comportant un corps, une noix de rotule articulée sur le corps, la partie cylindrique étant montée pivotante autour de son axe dans la noix de rotule. Le corps du boîtier de rotule est fixé à une partie fixe du turboréacteur, par exemple un carter intermédiaire ou encore un carter inter-compresseurs, situé entre le compresseur basse pression et le compresseur haute pression de la veine primaire.

En raison des efforts importants transmis par l'ensemble de suspension, le scénario de rupture d'un élément de cet ensemble doit être envisagé, tout en écartant l'éventualité de la séparation du turboréacteur du reste de l'aéronef. A cet effet, l'ensemble de suspension peut comprendre un chemin d'effort supplémentaire, ou en attente, prévu pour tenir un niveau de charge résiduelle, ou charge limite, lors de la rupture d'un élément de l'ensemble de suspension.

Il existe en outre actuellement un besoin de limiter les dimensions des turbomachines, tout en logeant un nombre important d'équipements. Afin de pouvoir répondre à ces différentes contraintes, il est nécessaire de réduire également l'encombrement des dispositifs de suspension.

Il existe également un besoin d'améliorer les dispositifs de suspension, pour une turbomachine carénée ou non-carénée. Il est connu de la technique antérieure le document WO 2020/074811 A1.

### Résumé

Il est ainsi proposé un ensemble de suspension pour une turbomachine, comportant :
- une poutre pour sa fixation à un pylône d'aéronef, la poutre comprenant une première partie et une seconde partie portant chacune un demi-logement définissant ensemble un logement de rotule,
- une noix de rotule engagée et articulée en rotation dans le logement de rotule, et
- une partie cylindrique destinée à être fixée à une partie fixe de la turbomachine, articulée dans le logement de rotule, et montée pivotante autour de son axe dans la noix de rotule, dans lequel l'ensemble de suspension comprend en outre un anneau de maintien entourant les deux demi-logement sur toute leur circonférence, ledit anneau de maintien étant prévu pour mettre en œuvre une fonction de sureté en cas de défaillance d'au moins un élément de l'ensemble de suspensions.

En outre, la poutre peut s'étendre axialement et les deux parties et les deux demi-sont symétriques les uns par rapport aux autres, par rapport à un plan radial et solidaires les uns par rapport aux autres par des éléments de fixation agencés sur la poutre.

En outre, l'anneau de maintien peut comporter deux parties d'anneau symétriques l'une par rapport à l'autre et en appui l'une contre l'autre par des brides d'anneau, lesdites brides d'anneau étant prévues pour la fixation des deux parties d'anneau entre-elles.

Les deux parties d'anneau peuvent en outre être symétriques l'une par rapport à l'autre selon le plan radial, les brides d'anneau étant agencées radialement interne et radialement externe, et dans lequel chaque demi-logement comporte des brides de logement de rotule agencées radialement interne et externe, les brides d'anneau et les brides de logement de rotule étant prévues pour leur fixation commune.

Alternativement, l'ensemble de suspension peut comprendre un anneau de rétention et le logement de rotule peut être cylindrique et dépourvu d'éléments de fixation, l'anneau de rétention étant agencé sur la circonférence externe du logement de rotule, et l'anneau de maintien étant agencé sur la circonférence externe de l'anneau de rétention, les deux parties d'anneau de l'anneau de maintien étant symétriques l'une par rapport à l'autre selon un plan axial perpendiculaire au plan radial, les brides d'anneau des deux parties d'anneau s'étendant axialement selon une direction axiale.

En outre une bague de rotule peut être agencée contre la circonférence interne du logement de rotule, la noix de rotule étant agencée dans la bague de rotule. Un moyen amortisseur de vibration peut également être agencé radialement entre la bague de rotule et la circonférence interne du logement de rotule.

Au surplus, la partie cylindrique peut comprendre un premier demi-cylindre et un second demi-cylindre agencés circonférentiellement bout à bout, et dans lequel le premier demi-cylindre comprend une première bride de demi-cylindre s'étendant radialement au premier demi-cylindre et le second demi-cylindre comprend une seconde bride de demi-cylindre s'étendant radialement au second demi-cylindre, la première bride de demi-cylindre et la seconde bride de demi-cylindre comprenant respectivement un premier moyen de fixation et un second moyen de fixation pour la fixation indépendante de chaque demi-cylindre à la partie fixe de la turbomachine.

En cas de défaillance d'une portion de la partie cylindrique, et donc d'un demi-cylindre, la portion défaillante ne permet plus d'assurer correctement sa liaison avec la partie fixe de la turbomachine. Le fait de séparer en deux parties le cylindre permet de ne pas transmettre la défaillance à l'intégralité du cylindre, et de conserver ainsi toutes les qualités fonctionnelles d'au moins une portion de la partie cylindrique, fixée à la turbomachine. La liaison avec la turbomachine est ainsi par ailleurs encore assurée malgré la défaillance.

En outre, le premier demi-cylindre peut comprendre une première bride de demi-cylindre s'étendant radialement au premier demi-cylindre et le second demi-cylindre peut comprendre une seconde bride de demi-cylindre s'étendant radialement au second demi-cylindre, la première bride de demi-cylindre et la seconde bride de demi-cylindre comprenant respectivement un premier moyen de fixation et un second moyen de fixation pour la fixation indépendante de chaque demi-cylindre à la partie fixe de la turbomachine.

La fixation indépendante permet de conserver les deux demi-cylindres indépendant l'un de l'autre pour ne pas propager à la partie fixe de la turbomachine une fissure apparaissant sur un des demi-cylindres.

La poutre peut également s'étendre axialement et les deux parties et les deux demi-logement peuvent être symétriques les uns par rapport aux autres, par rapport à un plan radial et solidaires les uns par rapport aux autres par des éléments de fixation agencés sur la poutre.

Selon un autre aspect, il est proposé un ensemble d'aéronef comprenant un pylône et une turbomachine, la turbomachine comprenant une partie fixe, l'ensemble d'aéronef comprenant en outre un ensemble de suspension tel que décrit ci avant.

### Brève description des dessins

D'autres caractéristiques, détails et avantages apparaîtront à la lecture de la description détaillée ci-après, et à l'analyse des dessins annexés, sur lesquels :
**Fig. 1**

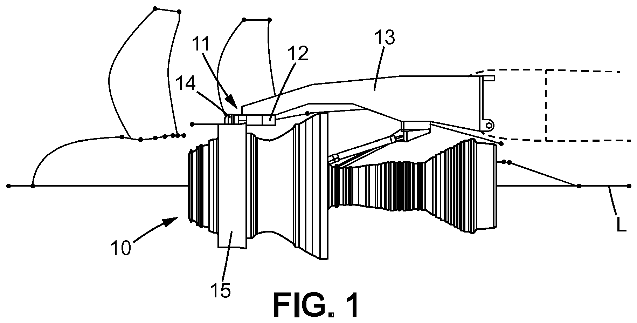

   [Fig. 1] la figure 1 est une vue d'ensemble d'une turbomachine fixée à un pylône d'aéronef par le biais d'un ensemble de suspension.
**Fig. 2A**

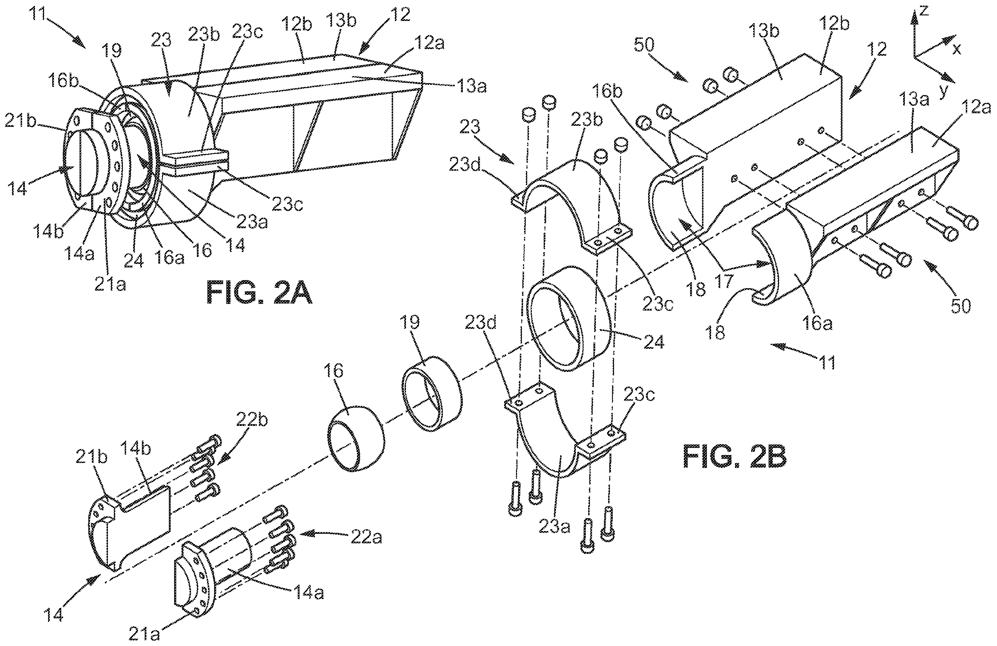

   [Fig. 2A] la figure 2A est une vue en perspective d'un ensemble de suspension selon un premier exemple de réalisation.
**Fig. 2B**
   [Fig. 2B] la figure 2B est une vue en perspective et éclatée de l'ensemble de la figure 2A.
**Fig. 3A**

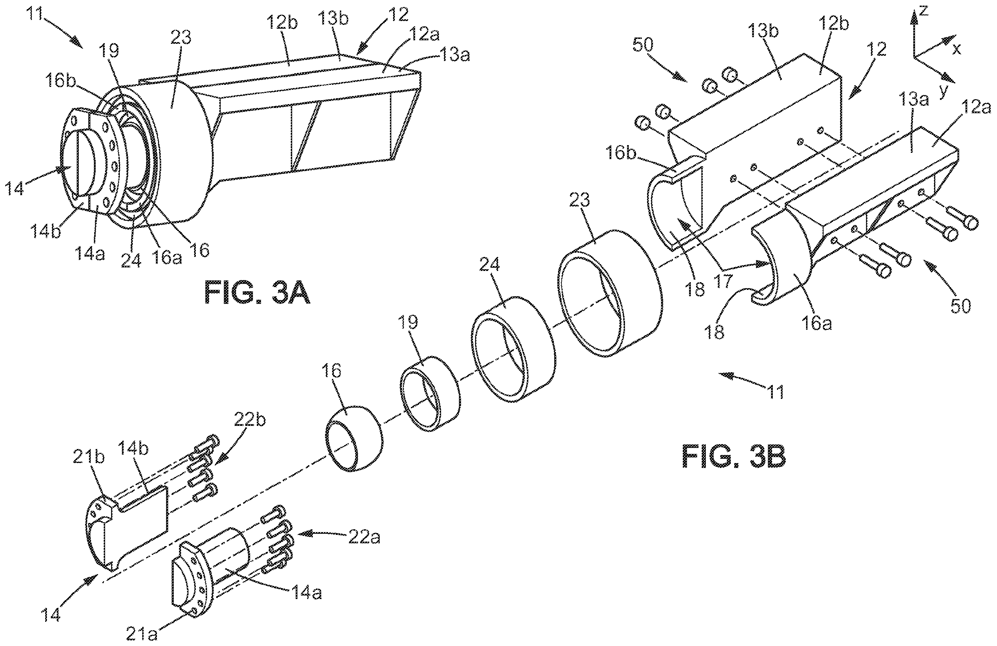

   [Fig. 3A] la figure 3A est une vue en perspective d'un ensemble de suspension selon un deuxième exemple de réalisation.
**Fig. 3B**
   [Fig. 3B] la figure 3B est une vue en perspective et éclatée de l'ensemble de la figure 3A.
**Fig. 4A**

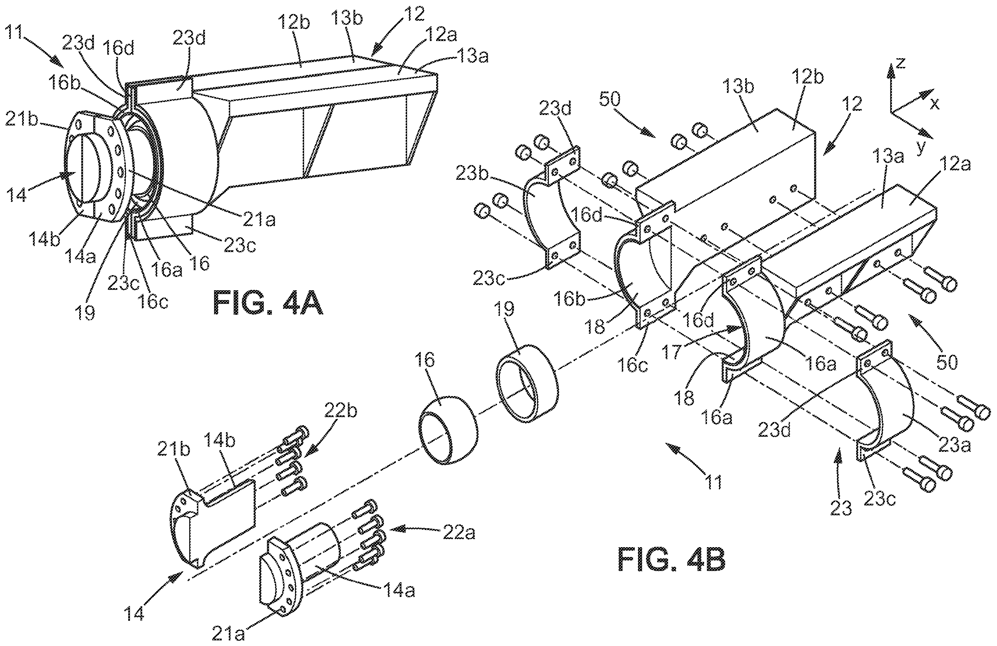

   [Fig. 4A] la figure 4A est une vue en perspective d'un ensemble de suspension selon un troisième exemple de réalisation.
**Fig. 4B**
   [Fig. 4B] la figure 4B est une vue en perspective et éclatée de l'ensemble de la figure 4A.
**Fig. 5**

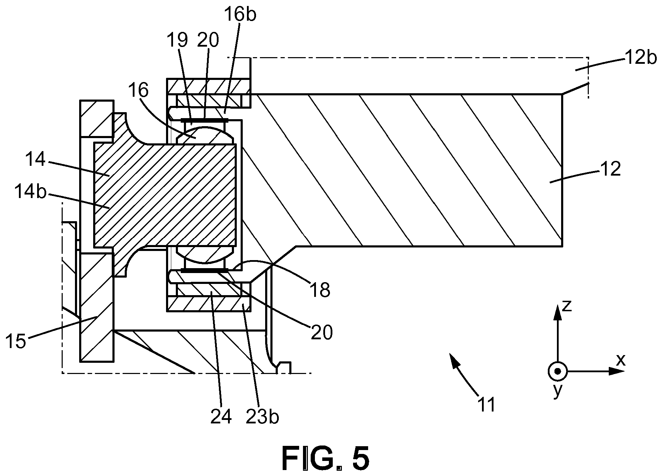

   [Fig. 5] la figure 5 est une vue en coupe selon un plan radial d'une alternative de réalisation de l'ensemble de suspension.

### Description des modes de réalisation

La figure 1 illustre une vue d'ensemble d'une turbomachine 10, sur laquelle un ensemble de suspension 11 est agencé. L'ensemble de suspension 11 comprend une poutre 12, fixée à un pylône d'aéronef 13, et une partie cylindrique 14, fixée à une partie fixe 15 de la turbomachine 10.

Dans la suite de la description, les termes radial et axial sont définis par rapport à l'axe de la turbomachine, noté L sur la figure 1.

Les figures 2A, 2B, 3A, 3B, 4A et 4B illustrent différents exemples de réalisation de l'ensemble de suspension 11. Dans ces exemples, l'ensemble de suspension 11 comprend notamment une poutre 12, une noix de rotule 16 et une partie cylindrique 14. L'ensemble de suspension s'étend principalement selon une direction axiale, s'étendant selon l'axe noté X sur les figures, depuis, en amont, la partie cylindrique 14 jusqu'en aval, la poutre 12.

La poutre 12 comprend une première partie 12a et une seconde partie 12b. La première partie 12a et la seconde partie 12b sont symétriques l'une par rapport à l'autre, selon un plan de symétrie radial, passant par les axes notés X et Z. Chaque première partie 12a et seconde partie 12b comprend une surface supérieure, respectivement 13a et 13b, qui peuvent être sensiblement plane. Les surfaces supérieures 13a, 13b sont prévues pour la fixation de la poutre 12 à un pylône d'aéronef 13. La poutre 12 permet ainsi de fixer l'ensemble de suspension 11 à l'aéronef, cette fixation étant répartie en deux parties. Ainsi, si une défaillance d'une partie de la poutre 12 est observée, telle que par exemple la propagation de criques, ou fissures, alors l'autre partie de la poutre n'est pas impactée par cette défaillance. Il y a donc une séparation de la poutre en deux parties de sorte à conserver au moins une partie de la poutre intacte en cas de défaillance de l'autre partie de la poutre.

En outre, la première partie 12a et la seconde partie 12b sont solidaires l'une de l'autre par des éléments de fixation 50. Ces éléments de fixation 50 sont par exemple des ensembles vis écrou, les vis traversant la première partie 12a et la seconde partie 12b selon une direction suivant l'axe noté Y, perpendiculaire au plan de symétrie radial.

Chaque première partie 12a et 12b comprend également respectivement un premier demi-logement 16a, et un second demi-logement 16b. Chaque demi-logement 16a, 16b est demi-cylindrique, les deux demi-logement étant en contact bord à bord l'un avec l'autre et définissant ensemble un cylindre, ce cylindre étant un logement de rotule 17, comprenant une circonférence interne 18. Le logement de rotule 17 reçoit la noix de rotule 16. Plus précisément, l'ensemble de suspension 11 peut comprendre en outre une bague de rotule 19. La bague de rotule 19 est agencée contre la circonférence interne 18 du logement de rotule 17. La noix de rotule 16 est quant à elle agencée dans la bague de rotule 19. La noix de rotule peut se définir comme une pièce sphérique comprenant un alésage traversant la sphère de part et d'autre de l'axe X.

Selon une alternative, telle qu'illustrée à la figure 5, l'ensemble de suspension 11 peut comprendre en outre un moyen amortisseur de vibration 20. Le moyen amortisseur de vibration 20 peut être agencé radialement entre la bague de rotule 19 et la circonférence interne 18 du logement de rotule 17. En d'autres termes, le moyen amortisseur de vibration peut être intercalé entre le logement de rotule 17 et la bague de rotule 19. Le moyen amortisseur de vibration 20 permet de limiter les vibrations et leurs conséquences en termes structural et acoustique. Il est caractérisé par sa capacité d'élasticité et de déformation élevée. Le moyen amortisseur de vibration 20 est par exemple un élément souple annulaire, de type élastomère. Le moyen amortisseur de vibration 20 réduit les vibrations transmisses depuis la turbomachine vers le pylône d'aéronef.

L'ensemble de suspension 11 comprend en outre une partie cylindrique 14. La partie cylindrique 14 est fixée à la partie fixe 15 de la turbomachine 10. La partie cylindrique 14 permet ainsi de fixer l'ensemble de suspension 11 à la turbomachine 10. La partie cylindrique 14 est agencée au moins en partie dans la noix de rotule 16, et plus précisément dans son alésage. En particulier, la partie cylindrique 14 est montée pivotante, autour de l'axe X, dans la noix de rotule 16. En outre, la partie cylindrique 14 comprend un premier demi-cylindre 14a et un second demi-cylindre 14b. Le premier demi-cylindre 14a et le second demi-cylindre 14b sont agencés circonférentiellement bout-à-bout. Plus précisément, conformément aux figures, le premier demi-cylindre 14a et le second demi-cylindre 14b peuvent être symétriques l'un par rapport à l'autre, selon un plan de symétrie radial, passant par l'axe X et l'axe noté Z. Alternativement, le premier demi-cylindre 14a et le second demi-cylindre 14b peuvent être symétriques l'un par rapport à l'autre, selon un plan de symétrie axial, passant par l'axe X et l'axe noté Y. Ainsi, par « bout-à-bout », il faut comprendre que les deux demi-cylindres, une fois assemblés ensemble, forment un cylindre à jonction selon le plan médian du cylindre, également plan de symétrie axial. En outre, chaque demi-cylindre comprend une surface semi-cylindrique et une surface plane opposée. L'agencement circonférentiellement bout-à-bout met en contact les surfaces planes des deux demi-cylindres.

Le premier demi-cylindre 14a et le second demi-cylindre 14b comprennent chacun respectivement une première bride de demi-cylindre 21a et une seconde bride de demi-cylindre 21b. La première bride de demi-cylindre 21a et la seconde bride de demi-cylindre 21b s'étendent radialement par rapport respectivement au premier demi-cylindre 14a et au second demi-cylindre 14b. En d'autres termes, la première bride de demi-cylindre 21a et la seconde bride de demi-cylindre 21b s'étendent radialement par rapport à l'axe X. La première bride de demi-cylindre 21a et la seconde bride de demi-cylindre 21b comprennent respectivement un premier moyen de fixation 22a et un second moyen de fixation 22b. Les moyens de fixation permettent la fixation indépendante de chaque demi-cylindre à la partie fixe 15 de la turbomachine 10. En particulier et par exemple, les moyens de fixations sont un ensemble de vis et écrou coopérant à la fois avec les brides de demi-cylindre 21a, 21b et le partie fixe de la turbomachine, les brides de demi-cylindre n'étant pas fixées entre-elles.

En outre, l'ensemble de suspension 11 comprend un anneau de maintien 23. L'anneau de maintien 23 est prévu pour mettre en oeuvre une fonction de sureté en cas de défaillance d'au moins un élément de l'ensemble suspension 11. Alternativement, l'ensemble de suspension 11 comprend en outre un anneau de rétention 24. L'anneau de maintien 23 et l'anneau de rétention 24 sont décrit en référence aux alternatives de réalisation représentées aux figures 2A, 2B, 3A, 3B, 4A et 4B.

Tel qu'illustré aux figures 2A et 2B, l'ensemble de suspension 11 comprend l'anneau de maintien 23 et l'anneau de rétention 24. L'anneau de rétention 24 est prévu pour conserver les deux demi-logements 16a, 16b en contact l'un avec l'autre en cas de rupture de la poutre 12. En d'autres termes, il permet de consolider l'assemblage des deux parties de poutres, dans la zone des deux demi-logements. Par exemple, en l'absence de l'anneau de rétention, en cas de rupture d'une partie 12a ou 12b de la poutre 12 entrainant la perte de la liaison de cette partie avec le pylône, la première partie 12a et la seconde partie 12b, et en particulier les deux demi-logements 16a, 16b peuvent s'écarter l'un de l'autre de sorte que le logement de rotule 17 s'ouvre. Il y a donc perte d'intégrité du logement de rotule 17 et celui-ci n'assure plus sa fonction de réception de la noix de rotule 16. La noix de rotule 16 n'est ainsi plus engagée et articulée en rotation dans le logement de rotule 17, et la partie cylindrique 19 perd ainsi sa liaison avec le pylône. La turbomachine 10 n'est par conséquent plus liée au pylône. Il y a ainsi une perte de transmission des efforts entre la turbomachine et le pylône. L'anneau de rétention 24 est agencé sur la circonférence externe du logement de rotule 17. En d'autres termes, l'anneau de rétention 24 entoure le logement de rotule 17. L'anneau de rétention 24 est en outre configuré pour être capable de résister, c'est-à-dire ne pas rompre, jusqu'à un niveau de charge limite, au-delà duquel l'anneau de rétention 24 subirait une déformation permanente. L'anneau de rétention 24 a donc une fonction de reprise d'efforts en cas de défaillance d'une partie de la poutre 12, cette partie défaillante ne remplissant plus sa fonction de transmission d'effort. Plus précisément, en cas de fonctionnement normal de l'ensemble de suspension 11, c'est-à-dire sans défaillance, l'anneau de rétention 24, reste en attente de reprise d'une certaine charge. C'est lorsqu'une défaillance apparait au niveau de la poutre 12 que l'anneau de rétention 24 reprend, au moins en partie, les efforts. L'anneau de rétention 24 est capable de remplir sa fonction de reprise d'effort au moins jusqu'à la prochaine inspection mécanique de l'ensemble de suspension 11. L'anneau de rétention permet ainsi d'éviter une rupture brutale de liaison entre la turbomachine et le pylône, en maintenant un niveau de charge suffisant jusqu'à la prochaine inspection de l'aéronef. En outre l'anneau de rétention 24 peut être de forme annulaire, ou de bague. Avantageusement, sa surface interne est complémentaire à la surface externe du logement de rotule, et la surface externe de l'anneau de rétention peut être de forme complémentaire à la surface interne de l'anneau de maintien 23.

L'ensemble de suspension 11 des figures 2A et 2B comprend en outre l'anneau de maintien 23. L'anneau de maintien 23 comporte deux parties d'anneau 23a, 23b. Les deux parties d'anneau 23a, 23b sont symétriques l'une de l'autre par rapport à un plan axial s'étendant selon les directions des axes X et Y, le plan axial étant perpendiculaire au plan radial de la turbomachine. Comme visible par exemple sur la figure 2B, le plan de symétrie des deux parties d'anneau 23a, 23b est perpendiculaire au plan de symétrie des deux parties de poutre 12a, 12b. Les deux parties d'anneau 23a, 23b sont en appui l'une contre l'autre par des brides d'anneau 23c, 23d. Les brides d'anneau 23c, 23d sont prévues pour la fixation des deux parties d'anneau 23a, 23b entre-elles. Les brides d'anneau 23c, 23b s'étendent axialement selon la direction de l'axe X. L'anneau de maintien 23 est agencé sur la circonférence externe de l'anneau de rétention 24. L'anneau de maintien 23 apporte une sureté supplémentaire à l'ensemble de suspension 11, dans le cas d'une défaillance, apparaissant notamment au niveau du logement de rotule 17. L'anneau de maintien 23 vient en effet apporter un renfort autour de l'anneau de rétention 24, pour assurer la reprise de charge en cas de défaillance de l'anneau de rétention 24. L'anneau de maintien 23 peut ainsi être qualifié d'anneau de reprise d'effort secondaire tandis que l'anneau de maintien 24 peut être qualifié d'anneau de reprise d'effort principal.

Les figures 3A et 3B, illustrent un autre exemple de réalisation de l'ensemble de suspension 11. Cet exemple, est identique à l'exemple précédemment décrit en référence aux figures 2A et 2B, à la différence que l'anneau de maintien 23 est sous forme monobloc, c'est-à-dire en une seule pièce. Cette configuration présente l'avantage d'être plus compacte que l'exemple précédent, car il y a absence de brides et de fixations.

Les figures 4A et 4B, illustrent encore un autre exemple de réalisation de l'ensemble de suspension 11. Dans cet exemple, à la différence des deux exemples décrits ci-avant, l'ensemble de suspension ne comprend pas d'anneau de rétention 24. L'anneau de maintien 23 est ainsi agencé sur la circonférence externe du logement de rotule 17. L'anneau de maintien 23 comporte également deux parties 23a, 23b et des brides d'anneau 23c, 23d. Dans cet exemple, les deux parties d'anneau 23a, 23b sont symétriques l'une de l'autre par rapport à un plan radial s'étendant selon les directions des axes X et Z, le plan radial étant confondu avec le plan radial de la turbomachine. En outre, comme visible par exemple sur la figure 4B, le plan de symétrie des deux parties d'anneau 23a, 23b est confondu avec le plan de symétrie des deux parties de poutre 12a, 12b. Les brides d'anneau 23c, 23d sont agencées respectivement radialement interne et radialement externe par rapport à l'axe L de la turbomachine. En outre, chaque demi-logement 16a, 16b comporte des brides, dénommées ci-après brides de logement de rotule 16c, 16d. Les brides de logement de rotule 16c, 16d, sont agencées radialement interne et radialement externe par rapport à l'axe X. Les brides de logement de rotule 16c, 16d et les brides d'anneau 23c, 23d sont agencées selon les mêmes plans et prévues pour leur fixation commune. En comparaison avec l'exemple des figures 2A et 2B, les deux parties d'anneau 23a, 23b ne sont en appui l'une contre l'autre par les brides d'anneau 23c, 23d. Au contraire, dans l'exemple illustré aux figures 4A et 4B, les brides d'anneau 23c, 23d sont en appui sur les brides de logement de rotules 16c, 16d, et les deux demi-logement 16a, 16b sont en appui l'un contre l'autre par les brides de logement de rotule 16c, 16d. Plus précisément, les brides d'anneau 23c, 23d enserrent les brides de logement de rotules 16c, 16d. En d'autres termes les brides de logement de rotules 16c sont prises entre les deux brides d'anneau 23c, et les brides de logement de rotules 16d sont prises entre les deux brides d'anneau 23d. Des moyens de fixation, sur les brides, tel que par exemple un ensemble de vis et écrou, viennent assembler ensemble les deux parties de logement de rotule 16a, 16b et les deux parties d'anneau 23a, 23b. Cette configuration, et notamment les fixations communes des brides 23c, 23d, 16c, 16d entre-elles, présente l'avantage de conserver les deux demi-logements 16a, 16b en contact l'un avec l'autre en cas de rupture de la poutre 12. En cas de défaillance d'une partie de la poutre, l'autre partie, qui conserve sa liaison avec le pylône, peut alors maintenir la transmission d'efforts entre la turbomachine et le pylône.

Par les différents exemples détaillés ci-avant, on comprend donc que l'ensemble de suspension est prévu pour maintenir sa fonction de liaison et de transmission d'effort depuis la turbomachine vers pylône, même en cas de défaillance d'une pièce le composant. A cet effet, et par exemple :
- si un demi-cylindre de la partie cylindrique 14 rompt, c'est-à-dire s'il y a perte de liaison entre le demi-cylindre et la turbomachine, alors l'autre demi-cylindre, qui n'est pas solidaire du demi-cylindre défaillant, maintient la liaison avec la turbomachine,
- si un partie de poutre 12 rompt, c'est-à-dire s'il y a perte de liaison entre la partie de poutre et le pylône, alors l'autre partie de poutre maintient la liaison avec le pylône, et l'anneau de maintien et l'anneau de rétention le cas échéant maintiennent la liaison avec la noix de rotule par la conservation de l'intégrité du logement de rotule.

## Revendications

1. Ensemble de suspension (11) pour une turbomachine (10), comportant :
- une poutre (12) pour sa fixation à un pylône d'aéronef (13), la poutre (12) comprenant une première partie (12a) et une seconde partie (12b) portant chacune un demi-logement (16a, 16b) définissant ensemble un logement de rotule (17),
- une noix de rotule (16) engagée et articulée en rotation dans le logement de rotule (17), et
- une partie cylindrique (14) destinée à être fixée à une partie fixe (15) de la turbomachine (10), articulée dans le logement de rotule (17), et montée pivotante autour de son axe (X) dans la noix de rotule (16),
**caractérisé en ce que**
l'ensemble de suspension (11) comprend en outre un anneau de maintien (23) entourant les deux demi-logement (16a, 16b) sur toute leur circonférence, ledit anneau de maintien (23) étant prévu pour mettre en oeuvre une fonction de sureté en cas de défaillance d'au moins un élément de l'ensemble de suspension (11).

2. Ensemble de suspension (11) selon la revendication 1, dans lequel la poutre (12) s'étend axialement et dans lequel les deux parties (12a, 12b) de la poutre et les deux demi-logement (16a, 16b) sont symétriques les uns par rapport aux autres, par rapport à un plan radial et solidaires les uns par rapport aux autres par des éléments de fixation (50) agencés sur la poutre (12).

3. Ensemble de suspension (11) selon la revendication 2, dans lequel l'anneau de maintien (23) comporte deux parties d'anneau (23a, 23b) symétriques l'une par rapport à l'autre et en appui l'une contre l'autre par des brides d'anneau (23c, 23d), lesdites brides d'anneau (23c, 23d) étant prévues pour la fixation des deux parties d'anneau (23a, 23b) entre-elles.

4. Ensemble de suspension (11) selon la revendication 3 dans lequel les deux parties d'anneau (23a, 23b) sont symétriques l'une par rapport à l'autre selon le plan radial, les brides d'anneau (23c, 23d) étant agencées radialement interne et radialement externe, et dans lequel chaque demi-logement (16a, 16b) comporte des brides de logement de rotule (16c, 16d) agencées radialement interne et externe, les brides d'anneau (23c, 23d) et les brides de logement de rotule (16c, 16d) étant prévues pour leur fixation commune.

5. Ensemble de suspension (11) selon la revendication 3 comprenant en outre un anneau de rétention (24) et dans lequel, le logement de rotule (17) est cylindrique et dépourvu d'éléments de fixation, l'anneau de rétention (24) étant agencé sur la circonférence externe du logement de rotule (17), et l'anneau de maintien (23) étant agencé sur la circonférence externe de l'anneau de rétention (24), les deux parties d'anneau (23a, 23b) de l'anneau de maintien (23) étant symétriques l'une par rapport à l'autre selon un plan axial perpendiculaire au plan radial, les brides d'anneau (23c, 23d) des deux parties d'anneau (23a, 23b) s'étendant axialement selon une direction axiale (X).

6. Ensemble de suspension (11) selon l'une quelconque des revendications précédentes comprenant en outre une bague de rotule (19) agencée contre la circonférence interne du logement de rotule (18), la noix de rotule (16) étant agencée dans la bague de rotule (19).

7. Ensemble de suspension (11) selon la revendication 6, comprenant en outre un moyen amortisseur de vibration (20) agencé radialement entre la bague de rotule (19) et la circonférence interne du logement de rotule (18).

8. Ensemble de suspension (11) selon l'une quelconque des revendications précédentes dans lequel la partie cylindrique (14) comprend un premier demi-cylindre (14a) et un second demi-cylindre (14b) agencés circonférentiellement bout à bout, et dans lequel le premier demi-cylindre (14a) comprend une première bride de demi-cylindre (21a) s'étendant radialement au premier demi-cylindre (14a) et le second demi-cylindre (14b) comprend une seconde bride de demi-cylindre (21b) s'étendant radialement au second demi-cylindre (14b), la première bride de demi-cylindre (21a) et la seconde bride de demi-cylindre (21b) comprenant respectivement un premier moyen de fixation (22a) et un second moyen de fixation (22b) pour la fixation indépendante de chaque demi-cylindre (14a, 14b) à la partie fixe (15) de la turbomachine.

9. Ensemble d'aéronef comprenant un pylône (13) et une turbomachine (10), la turbomachine (10) comprenant une partie fixe (15), l'ensemble d'aéronef comprenant en outre un ensemble de suspension (11) selon l'une quelconque des revendications 1 à 8.

## Patentansprüche

1. Aufhängungsanordnung (11) für ein Turbotriebwerk (10), umfassend:
- einen Träger (12) zur Befestigung an einem Mast (13) eines Luftfahrzeugs, wobei der Träger (12) ein erstes Teil (12a) und ein zweites Teil (12b) umfasst, die jeweils eine Gehäusehälfte (16a, 16b) tragen, die zusammen ein Kugelgelenkgehäuse (17) bilden,
- eine Kugelgelenkbuchse (16), die in das Kugelgelenkgehäuse (17) eingreift und drehbar darin gelagert ist, und
- ein zylindrisches Teil (14), das an ein feststehendes Teil (15) des Turbotriebwerks (10) befestigt werden soll, in dem Kugelgelenkgehäuse (17) angelenkt ist und um seine Achse (X) schwenkbar in der Kugelgelenkbuchse (16) gelagert ist,
**dadurch gekennzeichnet, dass**
die Aufhängungsanordnung (11) ferner einen Haltering (23) umfasst, der die beiden Gehäusehälften (16a, 16b) über ihren gesamten Umfang umgibt, wobei der Haltering (23) dazu vorgesehen ist, um im Falle eines Ausfalls zumindest eines Elements der Aufhängungsanordnung (11) eine Sicherungsfunktion zu erfüllen.

2. Aufhängungsanordnung (11) nach Anspruch 1,
wobei sich der Träger (12) axial erstreckt und wobei die beiden Teile (12a, 12b) des Trägers und die beiden Gehäusehälften (16a, 16b) in Bezug auf eine Radialebene symmetrisch zueinander angeordnet sind und durch an dem Träger (12) angeordnete Befestigungselemente (50) fest miteinander verbunden sind.

3. Aufhängungsanordnung (11) nach Anspruch 2,
wobei der Haltering (23) zwei Ringteile (23a, 23b) aufweist, die symmetrisch zueinander angeordnet sind und über Ringflansche (23c, 23d) aneinander anliegen, wobei die Ringflansche (23c, 23d) zur Befestigung der beiden Ringteile (23a, 23b) aneinander vorgesehen sind.

4. Aufhängungsanordnung (11) nach Anspruch 3,
wobei die beiden Ringteile (23a, 23b) in der Radialebene symmetrisch zueinander angeordnet sind, wobei die Ringflansche (23c, 23d) radial innen und radial außen angeordnet sind und wobei jede Gehäusehälfte (16a, 16b) radial innen und außen angeordnete Kugelgelenkgehäuseflansche (16c, 16d) aufweist, wobei die Ringflansche (23c, 23d) und die Kugelgelenkgehäuseflansche (16c, 16d) zu ihrer gemeinsamen Befestigung vorgesehen sind.

5. Aufhängungsanordnung (11) nach Anspruch 3,
ferner umfassend einen Rückhaltering (24), wobei das Kugelgelenkgehäuse (17) zylindrisch ausgebildet und frei von Befestigungselementen ist, wobei der Rückhaltering (24) an dem Außenumfang des Kugelgelenkgehäuses (17) angeordnet ist und der Haltering (23) an dem Außenumfang des Rückhalterings (24) angeordnet ist, wobei die beiden Ringteile (23a, 23b) des Halterings (23) in einer zur Radialebene senkrecht verlaufenden Axialebene symmetrisch zueinander angeordnet sind, wobei sich die Ringflansche (23c, 23d) der beiden Ringteile (23a, 23b) axial in einer axialen Richtung (X) erstrecken.

6. Aufhängungsanordnung (11) nach einem der vorstehenden Ansprüche,
ferner umfassend einen Kugelgelenkring (19), der an dem Innenumfang des Kugelgelenkgehäuses (18) angeordnet ist, wobei die Kugelgelenkbuchse (16) in dem Kugelgelenkring (19) angeordnet ist.

7. Aufhängungsanordnung (11) nach Anspruch 6,
ferner umfassend eine Schwingungsdämpfungseinrichtung (20), die radial zwischen dem Kugelgelenkring (19) und dem Innenumfang des Kugelgelenkgehäuses (18) angeordnet ist.

8. Aufhängungsanordnung (11) nach einem der vorstehenden Ansprüche,
wobei das zylindrische Teil (14) einen ersten Halbzylinder (14a) und einen zweiten Halbzylinder (14b) umfasst, die in Umfangsrichtung aneinanderstoßend angeordnet sind, und wobei der erste Halbzylinder (14a) einen ersten Halbzylinderflansch (21a) umfasst, der sich radial zum ersten Halbzylinder (14a) hin erstreckt, und der zweite Halbzylinder (14b) einen zweiten Halbzylinderflansch (21b) umfasst, der sich radial zum zweiten Halbzylinder (14b) hin erstreckt, wobei der erste Halbzylinderflansch (21a) und der zweite Halbzylinderflansch (21b) jeweils eine erste Befestigungseinrichtung (22a) bzw. eine zweite Befestigungseinrichtung (22b) zum unabhängigen Befestigen jedes Halbzylinders (14a, 14b) an das feststehende Teil (15) des Turbotriebwerks umfassen.

9. Luftfahrzeuganordnung mit einem Mast (13) und einem Turbotriebwerk (10), wobei das Turbotriebwerk (10) ein feststehendes Teil (15) umfasst, wobei die Luftfahrzeuganordnung ferner eine Aufhängungsanordnung (11) nach einem der Ansprüche 1 bis 8 umfasst.

## Claims

1. Suspension assembly (11) for a turbine engine (10), comprising:
- a beam (12) for the attachment thereof to an aircraft pylon (13), the beam (12) comprising a first portion (12a) and a second portion (12b) each carrying a half-housing (16a, 16b) which together define a ball joint housing (17),
- a ball joint nut (16) hingedly engaged to rotate in the ball joint housing (17), and
- a cylindrical part (14) intended to be attached to a fixed portion (15) of the turbine engine (10), hinged in the ball joint housing (17) and mounted so as to be pivotable about its axis (X) in the ball joint nut (16),
**characterized in that**
the suspension assembly (11) further comprises a support ring (23) surrounding the two half-housings (16a, 16b) around their entire circumference, said support ring (23) being provided to perform a safety function in the event of failure of at least one element of the suspension assembly (11).

2. Suspension assembly (11) according to claim 1, wherein the beam (12) extends axially and wherein the two portions (12a, 12b) of the beam and the two half-housings (16a, 16b) are symmetrical to each other with respect to a radial plane and are secured to each other by fastening elements (50) arranged on the beam (12).

3. Suspension assembly (11) according to claim 2, wherein the support ring (23) comprises two ring portions (23a, 23b) which are symmetrical to each other and which bear against each other via ring flanges (23c, 23d), said ring flanges (23c, 23d) being provided for fastening the two ring portions (23a, 23b) together.

4. Suspension assembly (11) according to claim 3, wherein the two ring portions (23a, 23b) are symmetrical to each other according to the radial plane, the ring flanges (23c, 23d) being arranged radially internally and radially externally, and wherein each half-housing (16a, 16b) comprises ball joint housing flanges (16c, 16d) arranged radially internally and externally, the ring flanges (23c, 23d) and the ball joint housing flanges (16c, 16d) being provided for their joint attachment.

5. Suspension assembly (11) according to claim 3, further comprising a retaining ring (24) and wherein the ball joint housing (17) is cylindrical and without fastening elements, the retaining ring (24) being arranged on the outer circumference of the ball joint housing (17), and the support ring (23) being arranged on the outer circumference of the retaining ring (24), the two ring portions (23a, 23b) of the support ring (23) being symmetrical to each other according to an axial plane perpendicular to the radial plane, the ring flanges (23c, 23d) of the two ring portions (23a, 23b) extending axially in an axial direction (X).

6. Suspension assembly (11) according to any one of the preceding claims, further comprising a ball joint ring (19) arranged against the inner circumference (18) of the ball joint housing, the ball joint nut (16) being arranged in the ball joint ring (19).

7. Suspension assembly (11) according to claim 6, further comprising vibration damping means (20) arranged radially between the ball joint ring (19) and the inner circumference (18) of the ball joint housing.

8. Suspension assembly (11) according to any one of the preceding claims, wherein the cylindrical part (14) comprises a first half-cylinder (14a) and a second half-cylinder (14b) which are arranged end-to-end circumferentially, and wherein the first half-cylinder (14a) comprises a first half-cylinder flange (21a) extending radially to the first half-cylinder (14a) and the second half-cylinder (14b) comprises a second half-cylinder flange (21b) extending radially to the second half-cylinder (14b), the first half-cylinder flange (21a) and the second half-cylinder flange (21b) respectively comprising a first attachment means (22a) and a second attachment means (22b) for the independent attachment of each half-cylinder (14a, 14b) to the fixed portion (15) of the turbine engine.

9. Aircraft assembly comprising a pylon (13) and a turbine engine (10), the turbine engine (10) comprising a fixed portion (15), the aircraft assembly further comprising a suspension assembly (11) according to any one of claims 1 to 8.
